# EUROPEAN PATENT APPLICATION

(11) **EP 2 233 967 A2**
(43) Date of publication of application: **29.09.2010**
(21) Application number: 10156774.1
(22) Date of filing: 17.03.2010
(51) Int. Cl.: G02F 1/1334, G02F 1/13357

(54) **Display device and portable terminal**

(30) Priority: 27.03.2009 JP 2009079976
(71) Applicant: Sony Ericsson Mobile Communications Japan, Inc., Tokyo 100-0075 (JP)
(72) Inventor: Ogita, Takeshi, TOKYO 108-0075 (JP); Takashima, Kouichiro, TOKYO 108-0075 (JP)
(74) Representative: Jackson, Jonathan Andrew

(57) **Abstract**

A display device includes a first light-transmissive glass plate having a first electrode for connection to a power supply, a second light-transmissive glass plate having a second electrode for connection to the power supply, a light dispersing element sealed between the first and second glass plates for transmitting light when voltage is applied and dispersing the light when the voltage is not applied, a light-transmissive transparent element laminated on the second glass plate and having a predetermined refractive index, a light guide plate laminated on the transparent element and having a refractive index lower than the transparent element for surface-emitting the light toward a side viewed by a user, a light emitting part provided on a lateral side of the light guide plate for emitting light, and a display control part for turning on or off the voltage applied to the first and second electrodes.

## Description

### BACKGROUND OF THE INVENTION

### 1. Field of the Invention

The present invention relates to a display device and portable terminal suitable for displaying images, characters, and other information on a display while showing a scene behind the display.

### 2. Description of the Related Art

There have been developed display devices having a transparent display that displays graphics, characters, and other information on the display, while showing a scene behind the display. Display devices having a polymer-dispersed liquid crystal (polymer network liquid crystal) within the transparent display are being put into practical use, as a result of development race of display devices employing different materials. The polymer-dispersed liquid crystal is suitable for transparent displays because it transmits incident light as it is when a voltage is applied to the polymer-dispersed liquid crystal and disperses the light when the voltage is not applied.

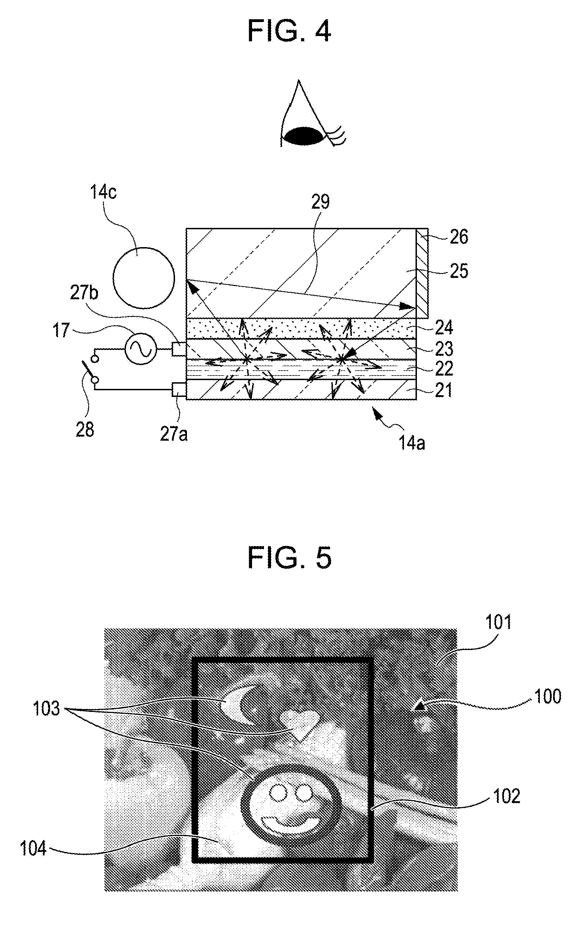

FIG. 5 schematically shows a transparent display 100 in use.

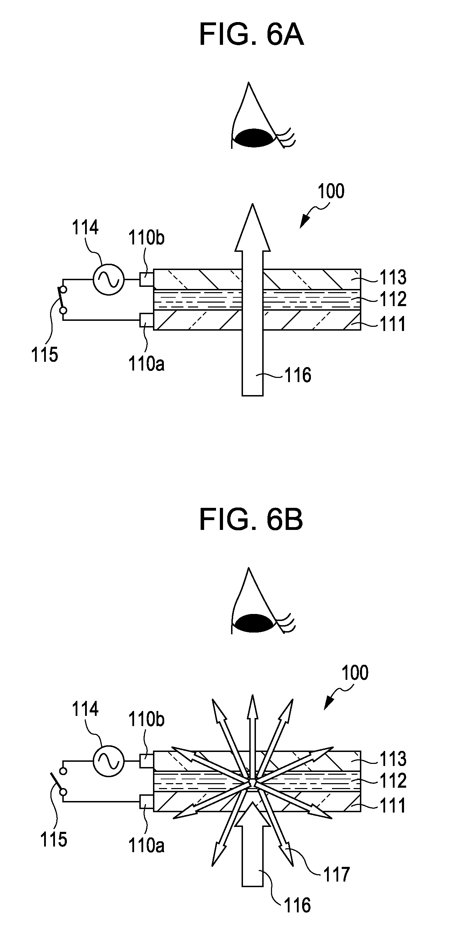

The transparent display 100 is disposed in a display device (not shown) and displays graphics, characters, and other information, as well as a scene behind the display, in a rectangular frame 102 in a display area. To show a scene 101 behind the transparent display 100 therethrough, a voltage is applied to a polymer-dispersed liquid crystal 112 (see FIG. 6) to turn the liquid crystal 112 into a transmittance mode in which the scene 101 is shown in a transmittance mode display area 104. When no voltage is applied to the polymer-dispersed liquid crystal, the liquid crystal 112 is turned into a dispersion mode in which graphics, characters, and other information are displayed in the dispersion mode display area 103.

FIGs. 6A and 6B are sectional views of the transparent display 100, illustrating an exemplary layer configuration and the light beams varying with the mode.

FIG. 6A shows an example of light beam in the transmittance mode.

The transparent display 100 includes a first glass plate 111, a polymer-dispersed liquid crystal 112, and a second glass plate 113, laminated in this order. A first electrode 110a and a second electrode 110b are provided on the first glass plate 111 and the second glass plate 113, respectively, and connected through respective electric conductors to a power supply 114. A switch 115 for switching the voltage on or off is provided between the conductor of the first electrode 110a and the power supply 114. When the switch 115 is turned on, a voltage is applied to the polymer-dispersed liquid crystal 112 and thereby liquid crystal molecules are aligned. This allows the light beam 116 incident from outside to pass through the transparent display 100. At this time, the user looking at the second glass plate 113 of the transparent display 100 can see the scene behind the first glass plate 111.

FIG. 6B shows an example of light beams dispersed in the dispersion mode.

When the switch 115 is turned off, no voltage is applied to the polymer-dispersed liquid crystal 112 and thereby liquid crystal molecules are dispersed. The light beam 116 incident from outside is dispersed by the polymer-dispersed liquid crystal 112 in the form of light beams 117 dispersed to the surroundings. The second glass plate 113 appears opaque to the user looking at the second glass plate 113 of the transparent display 100.

Japanese Unexamined Utility Model Publication No. 6-28837 discloses a technique for illuminating a polymer-dispersed liquid crystal with no unevenness in brightness by placing a material with a refractive index matching to the polymer-dispersed liquid crystal and the light guide plate.

### SUMMARY OF THE INVENTION

In the open air or any other place with a bright light, a lot of light enters the display and easily disperses. In such a situation, the user can easily recognize graphics, characters, and other information on the display. In a dark environment where the amount of the incident light is limited and hard to disperse within the display, the user feels it difficult to recognize the graphics, characters, and other information on the display.

To make the displayed information easily visible even in a dark environment, a lighting device is used to illuminate the polymer-dispersed liquid crystal. A back light or front light is typically provided in the display body. Since the back light itself is opaque, it is difficult to form a transparent display simply by providing the back light on the rear side of the display. A front light, which should be optically designed, is likely to increase the manufacturing cost.

Japanese Unexamined Utility Model Publication No. 6-28837 also discloses a technique for making the information on the display easily visible by employing a plane acrylic plate that is not optically designed. This technique, however, is not suitable for a transparent display, because an opaque black plate is placed on the display. In addition, this device yields low light efficiency, because the light incident from the light emitting part escapes through a surface of the light guide plate opposite to the light entrance surface.

It is desirable to provide a display device that can show the scene behind the display therethrough, while displaying graphics, characters, and other information on the display in an easily recognizable manner to the user even in a dark environment.

A display device according to an embodiment of the present invention includes a first light-transmissive glass plate having a first electrode formed thereon for connection to a power supply, a second light-transmissive glass plate having a second electrode formed thereon for connection to the power supply, a light dispersing element sealed between the first and second glass plates for transmitting light when a voltage supplied from the power supply through the first and second electrodes is turned on, and dispersing the light when the voltage is turned off, a light-transmissive transparent element laminated on the second glass plate and having a predetermined refractive index, a light guide plate for surface-emitting the light toward the side viewed by a user, the light guide plate being laminated on the transparent element and having a refractive index lower than the transparent element, a light emitting part provided on a lateral side of the light guide plate, and a display control part for turning on or off the voltage applied to the first and second electrodes.

A portable terminal according to another embodiment of the present invention includes a first light-transmissive glass plate having a first electrode formed thereon for connection to a power supply, a second light-transmissive glass plate having a second electrode formed thereon for connection to the power supply, a light dispersing element sealed between the first and second glass plates for transmitting light when a voltage supplied from the power supply through the first and second electrodes is turned on, and dispersing the light when the voltage is turned off, a light-transmissive transparent element laminated on the second glass plate and having a predetermined refractive index, a light guide plate for surface-emitting the light toward the side viewed by a user, the light guide plate being laminated on the transparent element and having a refractive index lower than the transparent element, a light emitting part provided on a lateral side of the light guide plate, a display control part for turning on or off the voltage applied to the first and second electrodes, and a communication unit for enabling communications in a predetermined communication scheme.

According to the embodiments described above, the light behind the display can be transmitted through the transparent area, while intended information can be displayed in the opaque area.

According to the embodiments of the present invention, light incident through a lateral side of the light guide plate located above the first and second glass plates that are laminated with the light dispersing element in between passes through the transparent plate having a refractive index higher than the light guide plate and reaches the light dispersing element. Even in a dark environment, the light dispersing element allows the scene behind the display to be shown therethrough and graphics, characters, and other information to be clearly displayed on the display, thereby improving visibility to the user.

### BRIEF DESCRIPTION OF THE DRAWINGS

FIG. 1 is a block diagram showing the internal structure of the portable terminal according to an embodiment of the present invention;
FIG. 2 is a sectional view of the transparent display according to the embodiment of the present invention;
FIG. 3 is a sectional view of the transparent display according to the embodiment of the present invention, with an adhesive sheet removed;
FIG. 4 is a sectional view of the transparent display according to the embodiment of the present invention, with a reflective sheet provided;
FIG. 5 illustrates a transparent display in the past in use; and
FIGs. 6A and 6B are sectional views illustrating the layer configuration of a transparent display in the past and light beams varying with the mode.

### DESCRIPTION OF THE PREFERRED EMBODIMENTS

A best mode (referred to below as an embodiment) of the present invention will be described below in the following order.
1. Embodiment (an exemplary portable terminal equipped with a transparent display)
2. Variations

### <1. Embodiment>

### [Example of general structure of portable terminal]

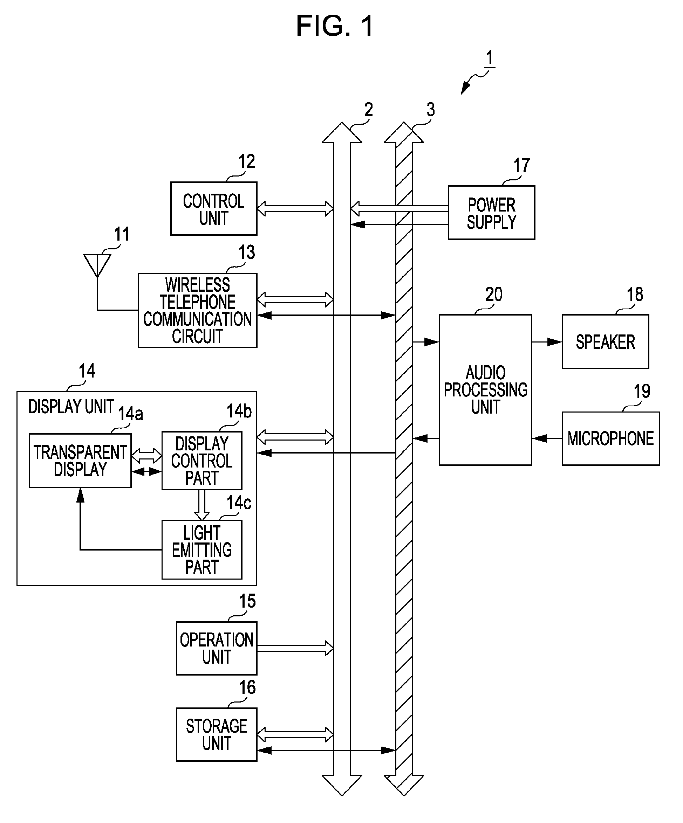

FIG. 1 shows the internal structure of a portable terminal 1 according to the present embodiment.

In the present embodiment, a wireless telephone link is established between the portable terminal 1 and a base station to enable wireless communications in various wireless communication schemes such as the CDMA (code division multiple access) scheme. The portable terminal 1 is contained in a small housing so that the user can carry it with him/her at all times. The portable terminal 1 according to the present embodiment has a power supply 17 for supplying power to various parts in the portable terminal 1. A secondary battery (lithium battery), for example, is employed as the power supply 17.

The portable terminal 1 has a wireless telephone communication circuit 13 serving as the wireless communication unit for enabling wireless telephone communications with a base station in a predetermined communication scheme. An antenna 11 is connected to the wireless telephone communication circuit 13. Although not shown, another communication circuit may be provided for relatively near-field wireless communications for Bluetooth® or wireless LAN (local area network).

Wireless telephone communications using the wireless telephone communication circuit 13 is controlled by a control unit 12 serving as the communication control unit in the portable terminal 1. The control unit 12 also controls the processing for wireless connection with the base station. The control unit 12 further controls various functions in the portable terminal 1 for other than wireless communication by exchanging control data with various parts in the portable terminal 1 via a control switch 2.

The portable terminal 1 has a display unit 14 including a liquid crystal display panel and displays various information under control of the control unit 12. Information displayed on the display unit 14 includes information about outgoing and incoming telephone calls, registered information such as a telephone directory and a mail address list, sent and received mails, and images downloaded through the Internet.

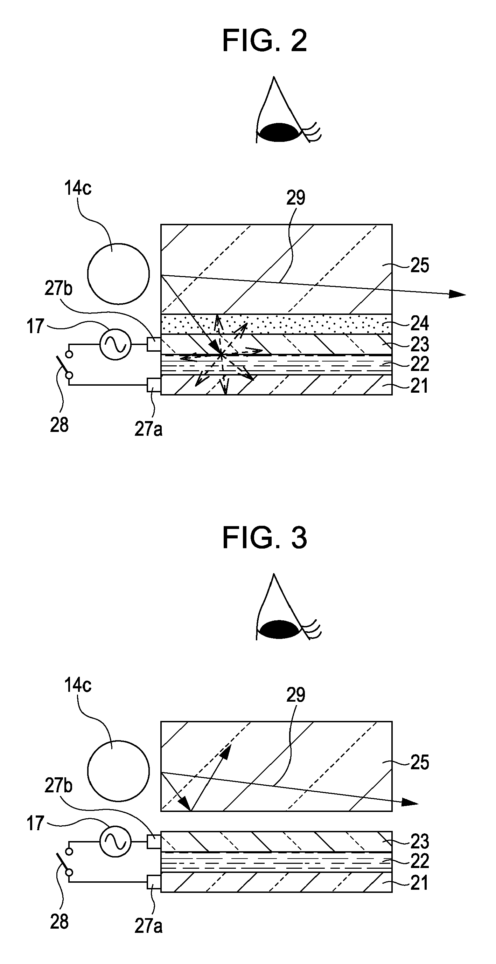

The display unit 14 according to the present embodiment has a transparent display 14a that turns transparent or opaque when the voltage supplied from a power supply 17 is turned on or off, a display control part 14b for controlling the turning on or off of the voltage applied to the transparent display 14a, and a light emitting part 14c for illuminating the transparent display 14a. The transparent display 14a includes a polymer-dispersed liquid crystal 22 (see FIG. 2) that turns transparent or opaque when the voltage is turned on or off. The display control part 14b includes a switch 28 (see FIG. 2) for turning on or off the voltage applied to the polymer-dispersed liquid crystal 22. A light emitting diode (LED) or organic EL (electro luminescence), for example, may be employed in the light emitting part 14c.

The control unit 12 controls the transmittance mode in which the transparent display 14a transmits light and the dispersion mode in which the transparent display 14a turns opaque and does not transmit light. When the control unit 12 is set to the transmittance mode, the display control part 14b turns on the voltage and the transparent display 14a turns transparent and transmits light. In this mode, the scene behind the transparent display 14a is visible therethrough. On the other hand, when the control unit 12 is set to the dispersion mode, the display control part 14b turns off the voltage and the transparent display 14a turns opaque and reflects light. In this mode, icons, images, characters, and other information are displayed on the transparent display 14a.

The portable terminal 1 is also equipped with an operation unit 15. The control unit 12 performs various processing in response to the operations performed on the operation unit 15. When keys or other elements are operated on the operation unit 15, a wireless telephone call is originated, a mail is sent or received, or data communication is initiated for Internet access or terminated, for example.

In the portable terminal 1, a storage unit 16 is connected to the control switch 2 and data switch 3 and stores, if necessary, data received from outside, for example. The storage unit 16 also stores programs necessary for control processing in the control unit 12. A flash memory or hard disk drive, for example, may be employed as the storage unit 16.

If audio data is contained in the packets received by the wireless telephone communication circuit 13, the audio data is extracted. The audio data extracted from the received packets are supplied to the audio processing unit 20 via the data switch 3 and demodulated into an analog audio signal. The demodulated analog audio signal is then supplied to a speaker 18 from which sound is output.

The portable terminal 1 is equipped with a microphone 19 to which sound is input. An audio processing unit 20 modulates the audio signal picked up by the microphone 19 into transmittable audio data and supplies the modulated audio data to the wireless telephone communication circuit 13. The wireless telephone communication circuit 13 allocates the supplied audio data to packets and sends the packets by radio to the base station.

FIG. 2 is a sectional view illustrating the structure of the transparent display 14a.

In recent years, a polymer-dispersed liquid crystal (polymer network liquid crystal) is favorably adopted to implement a transparent display which is drawing attention as a unique display. When incident light is limited in a dark environment, the polymer-dispersed liquid crystal does not disperse the light well and the information on the display is not easily recognized by the user. If the polymer-dispersed liquid crystal is employed as the transparent display, making the display clearly visible in any environment would provide a great advantage to the user.

In a transparent display 14a according to the present embodiment, a polymer-dispersed liquid crystal 22 is illuminated in an improved manner. This makes the images, characters, and other information on the display that has turned opaque easily visible even in a dark environment.

The transparent display 14a according to the present embodiment is formed taking into consideration the following points:
(1) To form the transparent display 14a from the smallest number of members as possible;
(2) To prevent loss of the light incident from the light emitting part by providing a mirror sheet around a light guide plate; and
(3) To implement the transparent display 14a at low cost using a light guide plate that is not optically designed.

In a dark environment, illumination is necessary to make images on the display recognizable. The members disposed on the front and rear sides of the display unit 14 should be transparent to turn the display partially transparent and also desirably flat and smooth to prevent deformation of the displayed images and other information.

To meet the above requisites, the transparent display 14a according to the present embodiment is formed by laminating a first glass plate 21, a polymer-dispersed liquid crystal 22, a second glass plate 23, a transparent adhesive sheet 24, and a light guide plate 25. The light guide plate 25 spreads the light incident from the light emitting part 14c all over the display. The members laminated on the polymer-dispersed liquid crystal 22 have flat and smooth surfaces. The transparent display 14a has a light emitting part 14c disposed on a lateral side of the light guide plate 25 for emitting light toward the light guide plate 25.

A first electrode 27a and a second electrode 27b are provided on the first and second light-transmissive glass plates 21 and 23 and connected through respective conductors to the power supply 17. A switch 28 for turning a voltage on or off is provided between the conductor from the first electrode 27a and the power supply 17. The display control part 14b uses this switch 28 to turn on or off the voltage applied to the first electrode 27a and second electrode 27b.

A light dispersing element is sealed between the first glass plate 21 and the second glass plate 23. The light dispersing element transmits light when the voltage supplied from the power supply 17 through the first electrode 27a and second electrode 27b is turned on and disperses light when the voltage is turned off. In the present embodiment, a polymer-dispersed liquid crystal 22 is employed as the light dispersing element. Being sealed between the first glass plate 21 and the second glass plate 23, the polymer-dispersed liquid crystal 22 is protected from degradation.

The second glass plate 23 and the light guide plate 25 are bonded together with an adhesive sheet 24 in between. The adhesive sheet 24 is laminated on the second glass plate 23 and serves as a light-transmissive transparent element having a predetermined refractive index. Desirably, the adhesive sheet 24 has a refractive index close to those of the polymer-dispersed liquid crystal 22 and light guide plate 25.

The light guide plate 25 for surface-emitting the light incident from the light emitting part 14c includes a transparent member, such as an acrylic resin or glass, that is not optically designed, and is laminated on the adhesive sheet 24. The light guide plate 25 has a refractive index lower than the adhesive sheet 24. The light reaching the adhesive sheet 24 through the light guide plate 25 passes through the adhesive sheet 24 at a predetermined angle of refraction and reaches the polymer-dispersed liquid crystal 22 through the second glass plate 23.

When the switch 28 is turned on, the voltage is applied to the polymer-dispersed liquid crystal 22 and liquid crystal molecules are aligned therein, allowing the light incident from outside to pass through the transparent display 14a. With this, the scene behind the first glass plate 21 becomes visible through the transparent display 14a to the user facing the light guide plate 25 and looking at the transparent display 14a. When the switch 28 is turned off, the liquid crystal molecules are disturbed in the polymer-dispersed liquid crystal 22, so the light incident from outside is dispersed within the polymer-dispersed liquid crystal 22.

With reference to FIG. 3, an exemplary operation of the transparent display 14a with the adhesive sheet 24 removed will be described.

FIG. 3 is a sectional view of the transparent display 14a with the adhesive sheet 24 removed.

Instead of the adhesive sheet 24, an air layer is present between the light guide plate 25 and the polymer-dispersed liquid crystal 22. Since the refractive index of the light guide plate 25 is higher than that of the air layer, any light incident at an angle greater than the critical angle is reflected before reaching the polymer-dispersed liquid crystal 22, so it is difficult for the user to easily recognize the graphics, characters, and other information on the display by the polymer-dispersed liquid crystal 22. For this reason, the adhesive sheet 24 is necessary in the transparent display 14a.

In the portable terminal 1 according to the present embodiment described above, the light incident through a lateral side of the light guide plate 25 located above the first glass plate 21 and second glass plate 23 that are laminated with the polymer-dispersed liquid crystal 22 in between passes through the adhesive sheet 24 having a refractive index higher than the light guide plate 25 and reaches the polymer-dispersed liquid crystal 22. The light guide plate 25 distributes the light incident from the light emitting part 14c over the entire surface thereof and surface-emits the light. Accordingly, even in a dark environment, the scene behind the transparent display 14a passes therethrough, while graphics, characters, and other information are clearly displayed by liquid crystal molecules dispersed in the polymer-dispersed liquid crystal 22, thereby improving visibility to the user.

### <2. Variations>

A reflective element may be provided on the light guide plate 25 to reflect light to the light guide plate 25 and thus increase the quantity of light surface-emitted by the light guide plate 25.

FIG. 4 is a sectional view of a transparent display 14a equipped with a light-reflective sheet 26 as the reflective element.

The transparent display 14a according to the present embodiment has the reflective sheet 26 disposed on a lateral side of the light guide plate 25 opposite to the light emitting part 14c to reflect the light transmitted through the light guide plate 25. The reflective sheet 26 may be formed from an ESR (enhanced specular reflector) sheet or other light-reflective material, for example. The reflective sheet 26 is closely attached to a lateral side of the light guide plate 25 to return the light transmitted along a light path 29 through the light guide plate 25 back to the light guide plate 25, so the loss of light is limited and the quantity of light on the display is accordingly increased. Even if a low luminance light source is employed as the light emitting part 14c, the graphics, characters, and other information displayed on the display are illuminated at a brightness level approximately equivalent to that of the transparent display 14a unequipped with the reflective sheet 26, thereby improving visibility to the user.

A transparent display may be formed by laminating the plates shown in FIG. 2 on the side of the light guide plate 25 viewed by the user. This transparent display, when reversed, provides functions and effects equivalent to those of the transparent display 14a according to the above embodiment.

In the transparent display 14a according to the above embodiment, in which the scene behind the transparent display 14a is shown as it is on the display when a voltage is applied to the polymer-dispersed liquid crystal 22, a reflective sheet or colored sheet may be placed below the polymer-dispersed liquid crystal 22 (at the interface between the first glass plate 21 and the polymer-dispersed liquid crystal 22, for example).

The transparent display 14a according to the above embodiment, in which the polymer-dispersed liquid crystal 22 is employed to display information, is also applicable to a light-reflective display device such as a reflective liquid crystal or electronic paper.

An adhesive that turns transparent once cured may be employed instead of the adhesive sheet 24. An LED or other lighting device may be employed as the light emitting part.

The present application contains subject matter related to that disclosed in Japanese Priority Patent Application JP 2009-079976 filed in the Japan Patent Office on March 27, 2009, the entire content of which is hereby incorporated by reference.

It should be understood by those skilled in the art that various modifications, combinations, subcombinations and alterations may occur depending on design requirements and other factors insofar as they are within the scope of the appended claims or the equivalents thereof.

## Claims

1. A display device comprising:
a first glass plate for transmitting light, said first glass plate having a first electrode formed thereon for connection to a power supply;
a second glass plate for transmitting said light, said second glass plate having a second electrode formed thereon for connection to said power supply;
a light dispersing element sealed between said first and second glass plates, for transmitting said light when a voltage supplied from said power supply through said first and second electrode is turned on and dispersing said light when said voltage is turned off;
a transparent element for transmitting said light, said transparent element being laminated on said second glass plate and having a predetermined refractive index;
a light guide plate for surface-emitting said light toward a side viewed by a user, said light guide plate being laminated on said transparent element and having a refractive index lower than said transparent element;
a light emitting part for emitting said light, said light emitting part being disposed on a lateral side of said light guide plate; and
a display control part for turning on or off the voltage applied to said first and second electrodes.

2. The display device according to claim 1, further comprising a reflective element for reflecting light transmitted through said light guide plate, said reflective element being provided on a lateral side of said light guide plate opposite to said light emitting part.

3. A portable terminal comprising:
a first glass plate for transmitting light, said first glass plate having a first electrode formed thereon for connection to a power supply;
a second glass plate for transmitting said light, said second glass plate having a second electrode formed thereon for connection to said power supply;
a light dispersing element sealed between said first and second glass plates, for transmitting said light when a voltage supplied from said power supply through said first and second electrode is turned on and dispersing said light when said voltage is turned off;
a transparent element for transmitting said light, said transparent element being laminated on said second glass plate and having a predetermined refractive index;
a light guide plate for surface-emitting said light toward a side viewed by a user, said light guide plate being laminated on said transparent element and having a refractive index lower than said transparent element;
a light emitting part for emitting said light, said light emitting part being disposed on a lateral side of said light guide plate;
a display control part for turning on or off the voltage applied to said first and second electrodes; and
a communication unit enabling communications in a predetermined communication scheme.
